# EUROPEAN PATENT APPLICATION

(11) **EP 1 624 407 A1**
(43) Date of publication of application: **08.02.2006**
(21) Application number: 05017018.2
(22) Date of filing: 04.08.2005
(51) Int. Cl.: G06Q 10/00

(54) **License management system, license management method, license management server, and license management software**

(30) Priority: 06.08.2004 JP 2004231372
(71) Applicant: Olympus Corporation, Tokyo 151-0072 (JP)
(72) Inventor: Otskua, Takeshi, Hachioji-shi Tokyo 192-8512 (JP)
(74) Representative: von Hellfeld, Axel

(57) **Abstract**

A license management system includes a server (20) for managing a plurality of kinds of accounts and issuance of a license key (40), and a plurality of terminal apparatuses (30; 31, 32, 33, 34, 35) which access the server through a network (10) by using respective predetermined accounts. The license management system comprises account information management means (20) for managing account information regarding the plurality of kinds of accounts, logging-in means (20, 30) for perform authentication of a predetermined account by using the predetermined account to log-in the predetermined account, license key management means (20, 21) for issuing a license key based on account information regarding the logged-in predetermined account, and storing license key issue information regarding issuance of the license key, account edit means (20) for permitting at least one associated account ranked below the logged-in predetermined account to be edited, and reference means (20) for permitting only part of license key issue information regarding the at least one associated account ranked below the logged-in predetermined account to be referred to.

## Description

The present invention relates to a license management server which manages a plurality of kinds of accounts, and also manages issuance of a license key. Furthermore, the invention relates to a license management system which comprises the above license management server and a number of terminal apparatuses which can access the server by using their respective accounts through a network, and also a license management method applied to the license management system. In addition, the invention relates to license management software for causing a computer to function as the above license management server.

In recent years, a larger number of product programs such as application software of a personal computer have been provided as a product program in which a license key necessary for executing the program is required when the program is installed or used, in order to prevent illegal use of it. Also, it has been generalized that such a license key is obtained from a license provider such as a programmer for a program.

Furthermore, in order that a number of identical programs be introduced into, e.g., a company (user), in general, the user obtains the programs from a selling agent. For example, in a license key issuing method or system disclosed in US 2001/0037403 A1, license keys for a number of identical programs are issued on-line from the selling agent to the user.

In ordinary cases, between the head office of a company which produces product programs and dealers (selling agents) which actually sell the programs to end users, local subsidiaries and distributors are present. That is, the head office, the subsidiaries, the distributors and the dealers have a hierarchical structure by making selling agency contracts with each other. In a conventional system having such a hierarchical structure, the head office must collect information regarding all accounts, and issue respective license keys to the accounts. Also, each of the distributors must disclose information regarding the dealers associated with each distributor, which is necessary in business, to the head office. Furthermore, in the case where authorization to issue a license is given to each dealer, the contents of the authorization to each dealer cannot be automatically customized, and must be modified based on account information stored in the head office.

In addition, such a system as disclosed in US 2001/0037403 A1 cannot be applied to the case where the above hierarchical structure is established.

The present invention has been made in view of the above circumstances, and its object is to provide a license management system, a license management method, a license management server and license management software, all in which an arbitrary account gives authorization to issue a license key to a low-order account ranked below the arbitrary account, while keeping secret information regarding the user having the low-order account, from a high-order account ranked above the arbitrary account.

According to a first aspect of the present invention, there is provided a license management system which is provided with a server for managing a plurality of kinds of accounts and issuance of a license key, and a plurality of terminal apparatuses which access the server through a network by using respective predetermined accounts, the license management system comprising:
an account information management section configured to manage account information regarding the plurality of kinds of accounts;
a logging-in section configured to perform authentication of a predetermined account by using the predetermined account to log-in the predetermined account;
a license key management section configured to issue a license key based on account information regarding the logged-in predetermined account, and store license key issue information regarding issuance of the license key;
an account edit section configured to permit at least one associated account ranked below the logged-in predetermined account to be edited; and
a reference section configured to permit only part of license key issue information regarding the at least one associated account ranked below the logged-in predetermined account to be referred to.

According to a second aspect of the present invention, there is provided a license management method of a license management system which is provided with a server for managing a plurality of kinds of accounts and issuance of a license key, and a plurality of terminal apparatuses which access the server through a network by using respective predetermined accounts, the license management method comprising:
performing authentication of a predetermined account by using the predetermined account to log-in the predetermined account;
issuing a license key based on account information regarding the logged-in predetermined account;
storing license key issue information regarding issuance of the license key; and
permitting only part of license key issue information regarding at least one associated account ranked below the logged-in predetermined account to be referred to.

According to a third aspect of the present invention, there is provided a license management server which permits a plurality of terminal apparatuses to access the server through a network by using respective predetermined accounts, the license management server comprising:
an account information managing section configured to manage account information regarding a plurality of kinds of accounts;
a logging-in section configured to permit a predetermined account to be logged-in by using the predetermined account;
a license key managing section configured to issue a license key based on account information regarding the logged-in predetermined account, and store license key issue information regarding issuance of the license key;
an account editing section configured to permit account information regarding at least one associated account ranked below the logged-in predetermined account to be edited; and
a reference section configured to permit only part of license key issue information regarding the at least one associated account ranked below the logged-in predetermined account to be referred to.

According to a fourth aspect of the present invention, there is provided a license management software which causes a computer to perform license management, the license management software causing a computer to:
manage account information regarding a plurality of kinds of accounts;
permit a predetermined account to log in on the computer with a respective one of external terminal apparatuses by using the predetermined account;
issue a license key based on account information regarding the logged-in predetermined account, and store license key issue information regarding issuance of the license key; and
permit account information regarding at least one associated account ranked below the logged-in predetermined account to be edited, and also only part of the license key issue information regarding the at least one associated account ranked below the logged-in predetermined account to be referred to.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the configuration of a license management system according to a first embodiment of the present invention;
FIG. 2 is a view showing the historical structure of accounts;
FIG. 3 is a view showing the configuration of a server in the license management system according to the first embodiment;
FIG. 4 is a view showing ranges in which reference can be made by accounts of a number of ranks;
FIG. 5 is a table indicating limits of account management functions of the accounts;
FIG. 6 is a table indicating limits of license key issue history reference functions of the accounts;
FIG. 7 is a view showing record structures of an account table and a license issue history table, which are registered in a database;
FIG. 8 is a flowchart of a license issue operation;
FIG. 9 is a view showing the format of a license key;
FIG. 10 is a view showing the system configuration of a purchaser-side;
FIG. 11 is a view showing the format of a license information setting file;
FIG. 12 is a view showing an input window displayed when the license information setting file is prepared or modified;
FIG. 13 is a flowchart of an operation of an installer;
FIG. 14 is a flowchart of a license key issue history retrieval operation;
FIG. 15 is a view showing the system configuration of a license management system according to a second embodiment of the present invention;
FIG. 16 is a flowchart of a license key issuer retrieval operation; and
FIG. 17 is a flowchart of an operation for deleting a specific account.

The best mode for carrying out the present invention will be explained with reference to the accompanying drawings.

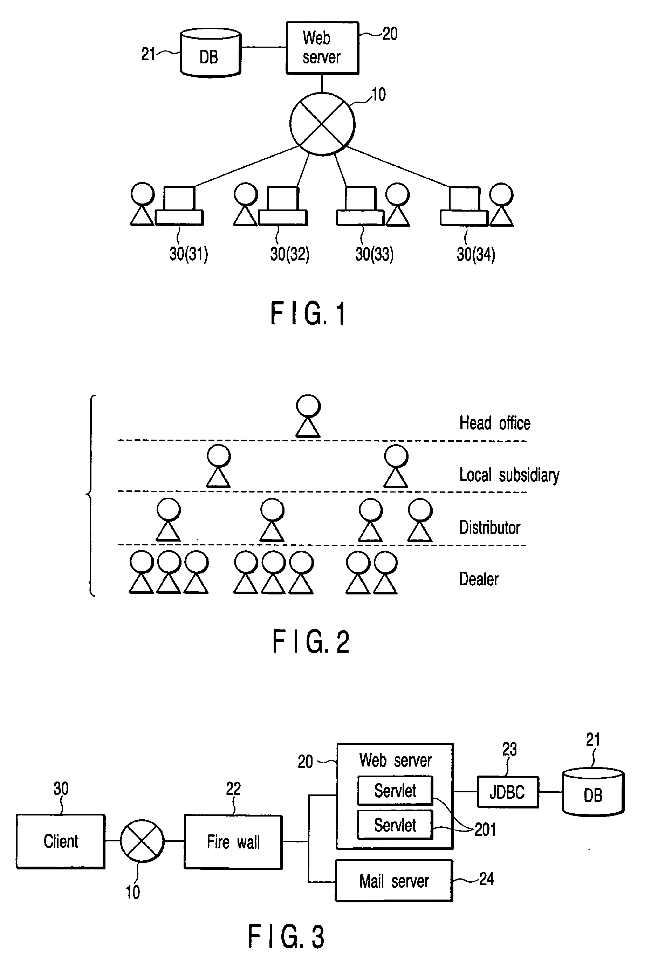

As shown in FIG. 1, a license management system according to a first embodiment of the present invention is configured to enable various kinds of client terminal apparatuses 30 (a client terminal apparatus 31 of the head office of a company, a client terminal apparatus 32 of a locally incorporated company, a client terminal apparatus 33 of a distributor, and a client terminal apparatus 34 of a dealer) having respective accounts to access a Web server 20 provided with a database (DB) 21 through Internet 10 which is an example of a network.

Actually, the head office, subsidiaries, distributors and dealers have a hierarchal structure in which they are ranked in this order as shown in FIG. 2. To be more specific, the subsidiaries are ranked below the head office, the distributors are ranked below the subsidiaries, and the dealers are ranked below the distributors. In addition, although they are not shown, user companies (client terminal apparatuses) are ranked below the dealers. It should be noted that the user companies may be allowed to get access to various kinds of Web servers through the Internet 10, but they cannot get access to the Web server 20 in the first embodiment. In each of the user companies, a number of end users who cannot access the Web server 20 are present.

The Web server 20 functions as a license management server, and is connected to the Internet 10 through a firewall 22 for detecting and preventing illegal access. The Web server 20 can access the DB 21 via an interface called a Java database connectivity (JDBC) 23, and also transmit E-mail through a mail server 24. The Web server 20 executes various kinds of programs called servlets 201 to provide various functions such as an account information management function, a log-in function, a license key management function, an account editing function, and a reference function. The account information management function is a function of managing account information regarding a plurality of kinds of accounts; the log-in function is a function of authenticating a predetermined account by using the predetermined account; the license key management function is a function of issuing a license key based on account information regarding the above logged-in predetermined account, and storing, in the DB 21, license issue information regarding issuance of the license key; the account editing function is a function of preparing, deleting or changing account information regarding an associated account ranked below the logged-in predetermined account (in the following explanations, such preparing, deleting or changing processing means editing); and the reference function is a function of permitting only part of license key issue information regarding the associated account ranked below the logged-in predetermined account to be referred to. In the first embodiment, those sevlets are installed as license management software in the Web server 20.

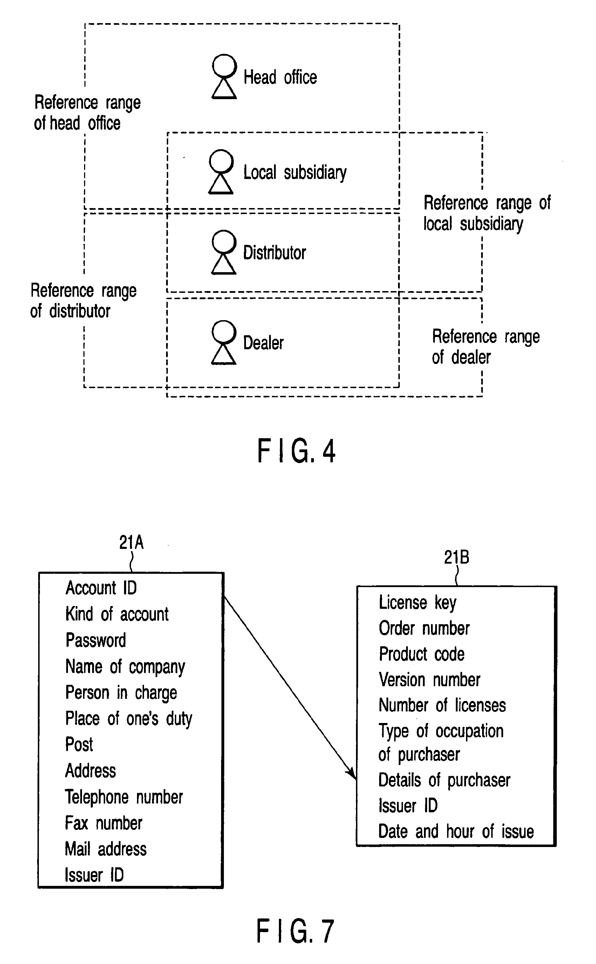

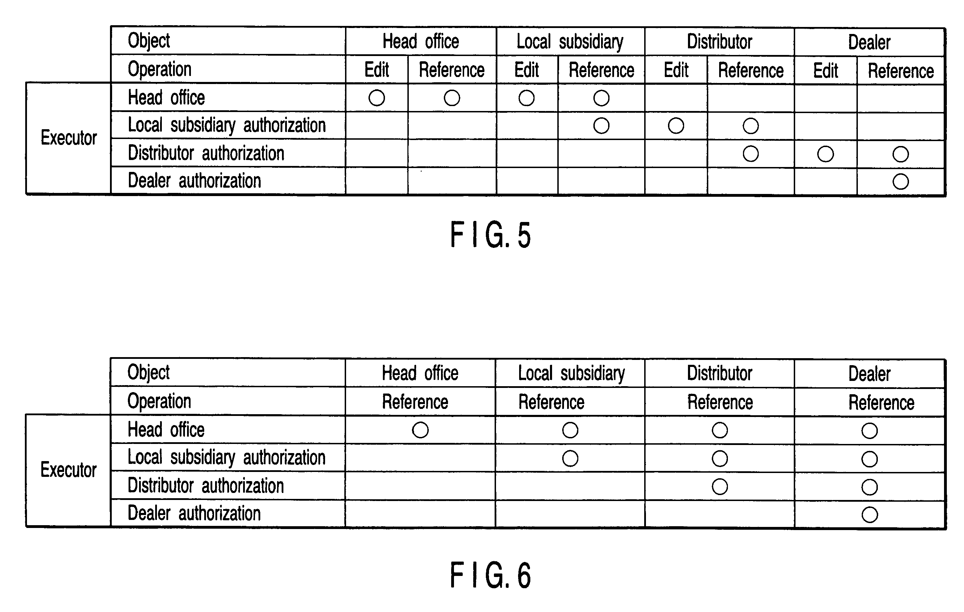

The accounts of different ranks can refer to and edit account information within ranges indicated in FIGS. 4 and 5, respectively. That is, each of the accounts can refer to and edit only account information regarding each account and at least one associated account ranked immediately behind each account.

Furthermore, each account can refer to license key issue information regarding all associated accounts ranked below each account as shown in FIG. 6. However, in this case, not all the license key issue information can be referred to, that is, only part of the license key issue information, which is other than personal information, etc., contained therein, can be referred to.

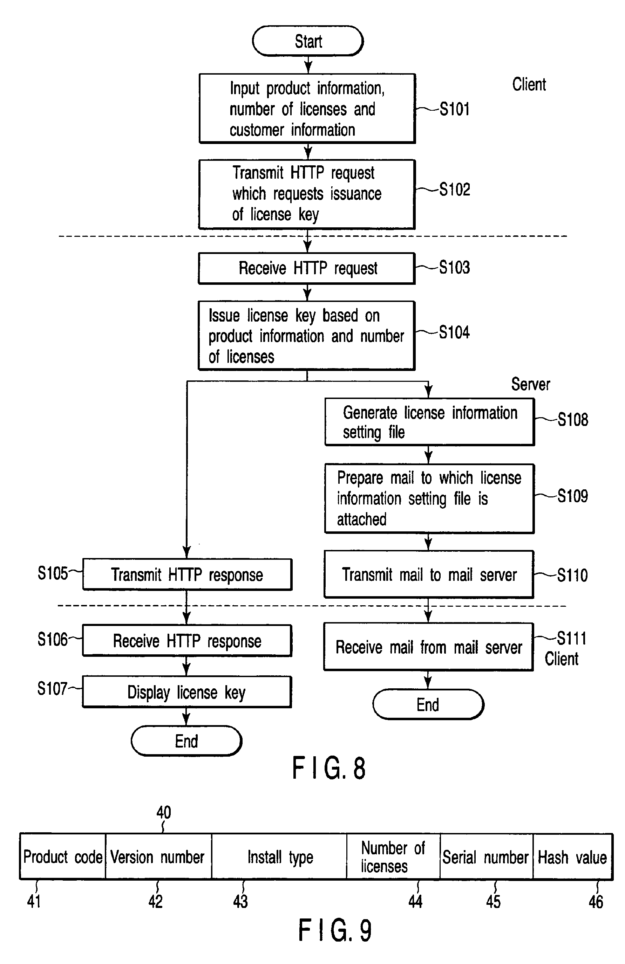

For example, in the DB 21, an account table and a license issue historical table are stored. The account table stores account information, and the license issue historical table stores license key issue information. These tables each have such a record structure as shown in FIG. 7. To be more specific, an account table 21A provided as the above account table stores account information items regarding the following items of a user: account ID, kind of account, password corresponding to the account ID, name of company, name of person in charge, his or her place of duty, post, address, telephone number, facsimile number, E-mail address and issuer ID. Of those information items, the information items regarding the account ID, kind of account and issuer ID are indispensable for the account information. A license issue historical table 21B provided as the above license issue historical table stores license issue information containing information items regarding the following items: license key, order number, product code, version number, number of licenses, type of occupation of purchaser, details of purchaser, issuer ID, and date and hour of issue. Of those information items, the information items regarding the license key and the issuer ID are indispensable for the license issue information. Furthermore, in the account table 21A, with respect to the highest-order rank, i.e., the head office, an account ID in an account record in the head office is used as an issuer ID for issuing a license for an account in the head office, and with respect to the other ranks, account IDs in account records of ranks, which are respectively ranked immediately ahead the other ranks, are used as respective issuer IDs for issuing licenses for accounts at the other ranks. Furthermore, issuer IDs in the license issue historical table 21B corresponds to respective accounts ID in the account table 21A, which are automatically input at the time of issuing license keys.

When the account table 21A and the license issue historical table 21B have the above record structures, the Web server 20 performs a control such that of the account information of the account table 21A, only information regarding an account having an account ID identical to that of a logged-in account and information regarding an account having an issuer ID identical to that of the above logged-in account can be referred to and edited (the above account having the account ID identical to that of the logged-in account and the above account having the issuer ID identical to that of the logged-in account will be hereinafter referred to as a self account and a subordinate account, respectively). Due to the above control, the reference and edit ranges can be limited to those shown in FIGS. 4 and 5.

Furthermore, of the license key issue information in the license issue historical table 21B, only license key issue information regarding a self account and at least one subordinate account of the self account and at least one subordinate account of the above former subordinate account is permitted to be referred to, thereby limiting the reference range to that shown in FIG. 6. Moreover, the Web server 20 performs a control such that with respect to the license key issue information in the license issue historical table 21B, when an issuer ID is identical to a self account, the information items regarding all the above items are permitted to be referred to, and when the issuer ID is a subordinate account, information items regarding one or more of the items "order number", "product code", "product version number", "number of licenses" and "date and hour of issue" can be allowed to be referred to, and information items regarding the items "license key", "type of occupation of purchaser" and "details of purchaser" is inhibited from being referred to. As a result, the reference range can be limited to that shown in FIG. 6.

The operation of issuing a license key which includes the number of licenses for available software, in the above license management system according to the first embodiment, will be explained with reference to the flowchart in FIG. 8.

First, a client terminal apparatus 34 of a dealer is logged in by using the account ID and password of the dealer, and an image for issuance of a license key is displayed in a Web browser. In this state, product information (the product code and version number of product software), the number of licenses and customer information (the type of occupation and details of purchaser) are respectively input to displayed fields for the product information, the number of licenses and the customer information (step S101). Then, an HTTP request which requests issuance of a license key is transmitted to the Web server 20 by a predetermined transmission operation (step S102).

In the Web server 20, the HTTP request is received (step S103), such a license key 40 as shown in FIG. 9 is issued based on the above input product information and number of licenses, and in addition, license key issue information is registered in the license issue historical table 21B (step S104). It should be noted that the license key 40 includes a product code 41, a version number 42, an install type 43, the number 44 of licenses, a serial number 45, and a hash value 46, etc. The install type 43 is information indicating whether the type of installing is standard installing or upgrade installing. The hash value 46 is a value obtained by applying a predetermined hash algorithm to the product code 41, the version number 42, the install type 43, the number 44 of licenses and the serial number 45, and is also intended to prevent the license key 40 from being illegally altered. Also, in order to prevent illegal alteration of the license key 40, the key 40 itself may be encrypted.

Next, the Web sever 20 transmits an HTTP response to a client terminal apparatus 30 which issues the above HTTP request, i.e., the client terminal apparatus 34 of a dealer in this case (step S105). Then, the client terminal apparatus 34 receives the HTTP response (step S106), and displays the above issued license key 40 in the Web browser (step S107).

At the same time, the Web server 20 generates a license information setting file based on the issued license key 40 (step S108), and prepares E-mail to which the license information setting file is attached (step S109). The destination of the E-mail can be detected by retrieving a mail address from the account table 21A in accordance with the account ID of the logged-in account. Then, the E-mail to which the license information setting file is attached is transmitted to the mail server 24 (step S110). Thereby, the client terminal apparatus 34 of the dealer, in which the mail address of the above destination is set, can receive the above E-mail from the mail server 24 (step S111).

The license information setting file is used in achieving a silent install mode in which product software is installed, after a value is automatically set based on information of the setting file.

The operation of installing product software by using the license information setting file and the license key issued in the above manner will be explained.

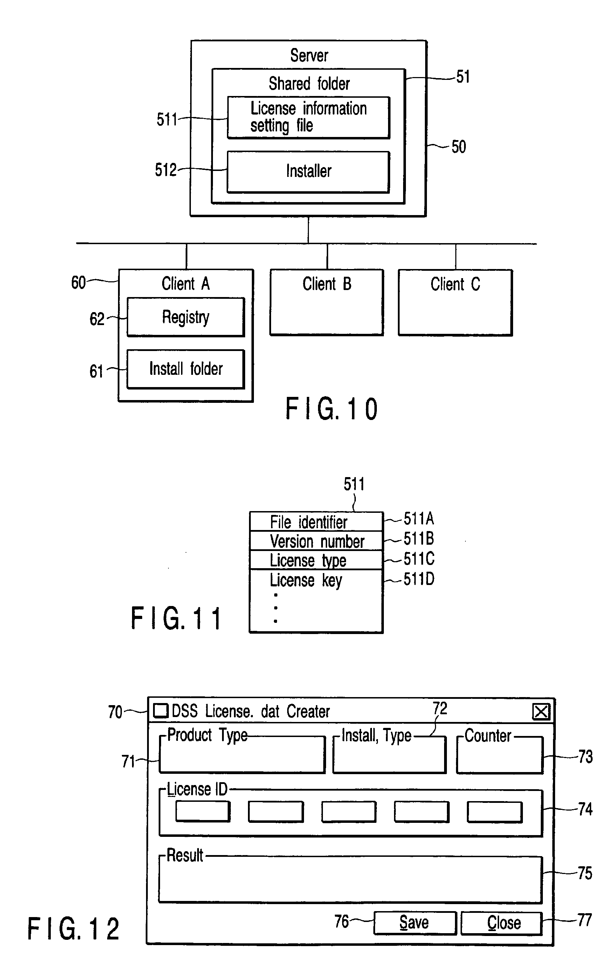

In a company which is a purchaser of the product software, as shown in FIG. 10, a server 50 is connected to a plurality of clients 60 through a LAN. The server 50 and the clients 60 each comprise a personal computer provided with a CPU, a memory and an HDD, etc, not shown. In the server 50, a shared folder 51, which can be accessed by the clients 60, is set. A dealer makes the shared folder 51 store a license information setting file 511 and an installer 512 of the product software. Then, the user of each of the clients 60 executes the installer 512 in the shared folder 51 of the server 50. Thereby, files of the product software are installed in an install folder 61 of each client 601, and install information is written to a registry 62.

It should be noted that the above license information setting file 511 may be attached to the E-mail to be received by the client terminal apparatus 34 of the dealer, or may be prepared based on the license key displayed in the Web browser in the client terminal apparatus 34.

The license information setting file 511 has a file format in which a file identifier 511A, a version number 511B, a license type 511C and a license key 511D are arranged as shown in FIG. 11. The license type 511C is information indicating whether the license type is a multi-license type or a bundled license type. If the license type 511C indicates the multi-license type, a multi-license key is written to the license key 511D. In the multi-license key, a value of 1 or greater is written as the number 44 of licenses in the license key 40 shown in FIG. 9. On the other hand, in the bundled license type, a plurality of bundled license keys are written to the license key 511D. Thus, users, which have bought product software, respectively, can apply respective bundled license keys allocated to the packages of the product software. In each of the bundled license keys, a value of 1 is written as the number 44 of licenses.

Writing of the bundled license keys to the license information setting file 511 is carried out in such an input window 70 as shown in FIG. 12, when the license information setting file is prepared in the client terminal apparatus 30, e.g., the client terminal apparatus 34 of the dealer. In the input window 70, a product type indicating area 71, a license type indicating area 72, a number-of-licenses indicating area 73, a license key input field 74, a result indicating area 75, a save button 76 and a cancel button 77 are arranged. A product type and a license input in a predetermined procedure are displayed in the indicating areas 71 and 72, respectively, and the number of written licenses is also displayed in the number-of-licenses indicating area 73 (this displaying is not shown). Then, bundled license keys are input to the license key input field 74, and the save button 76 is clicked on (with a mouse), whereby the bundled license keys are written to the license key 511D. At this time, a message indicating whether or not this writing has succeeded or failed is indicated in the result indicating area 75. When it has succeeded, the number of licenses indicated in the number-of-licenses indicating area 73 is increased by 1.

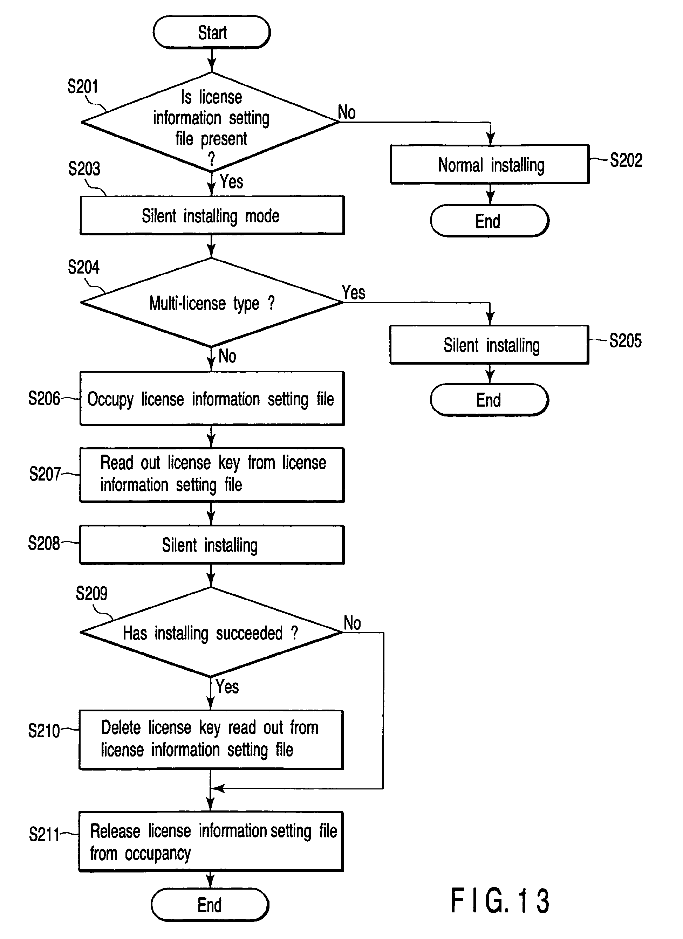

The installer 512 on the shared folder 51 in the server 50, which is to be executed by the above clients 60, is disclosed in an operation flowchart in FIG. 13. To be more specific, first, the installer 512 determines whether a license information setting file 511 is stored in the same folder as it, i.e., the shared folder 51 of the server 50 or not (step S201). Then, when no license information setting file 511 is present, the mode is shifted to a normal installing mode, and normal installing is carried out in an interactive manner with the user (step S202).

On the other hand, when a license information setting file 511 is present in the shared folder 51, the mode is shifted to a silent installing mode in which a value is automatically set based on the information of the license information setting file 511, and installing is then carried out (step S203).

In the silent installing mode, first, it is determined whether or not the license type 511C indicated in the license information setting file 51 is information indicating the multi-license type (step S204). Then, when the license type 511C indicates the multi-license type, installing is carried out by using a multi-license key written to the license key 511D, i.e., it is not interactively performed with the user (step S205).

On the other hand, when the license type 511C is not the information indicating the multi-license type, i.e., it is information indicating the bundled license type, the license information setting file 511 is occupied, i.e., it is inhibited from being operated from another apparatus (step S206). Then, one of the bundled license keys written to the license key 511D of the occupied license information setting file 511 is read out (step S207), and silent installing is carried out by using the read-out license key (step S208). Thereafter, it is determined whether the installing has succeeded or failed (step S209). When it has succeeded, the read-out license key is deleted from the license key 511D of the above occupied license information setting file 511 (step S210). Then, the license information setting file 511 is released from occupancy (step S211).

On the other hand, in the step S209, it is determined that the installing has failed, the step to be carried out proceeds to the step S211 without deleting the above read-out license key from the license information setting file 511, and the license information setting file 511 is released from occupancy. Needless to say, in this case, for example, a predetermined error message is displayed in order that installing be re-performed.

Next, another operation of the license management system according to the first embodiment will be explained.

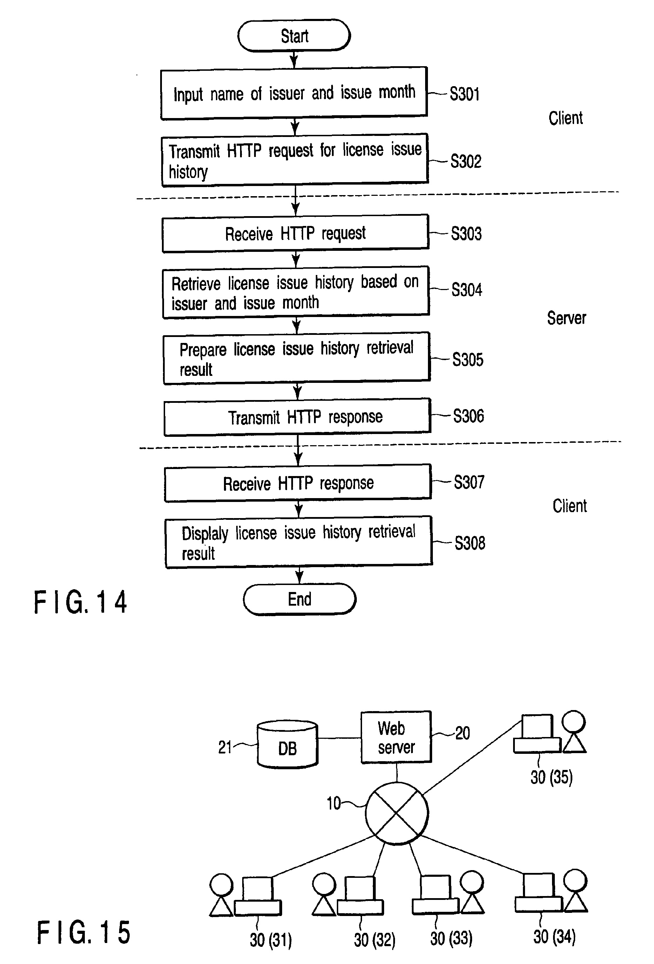

In the case where an issuance history of license keys issued as explained with reference to FIG. 8 is retrieved and referred to from any of the client terminal apparatuses, the operation will be performed as shown in FIG. 14.

More specifically, first, a client terminal apparatus 30 of a client is logged in by using the account ID and password of the client, and an image for retrieval of a license issuance history is displayed in the Web browser. In this state, the name of an issuer and the issue month are input to respective fields displayed in the image (step S301). Then, an HTTP request for a license issue history is transmitted to the Web server 20 by the predetermined transmission operation (step S302). It should be noted that in the above case, a number of names can be input at the same time to retrieve the name of the issuer.

In the Web server 20, the HTTP request is received (step S303), and information regarding issuance of a license key having an issuer ID and issue date and time corresponding to the above input name (of the issuer) and issue month is retrieved from the license issue historical table (step 304). In the result of this retrieval, information indicated as shown in FIGS. 6 and 7 is referred to. Then, as explained above, only information which is permitted in range to be referred to is prepared as a license issue history retrieval result based on the account ID of a logged-in account (step S305). The prepared license issue history retrieval result is transmitted as an HTTP response to a client terminal apparatus 30 which issues the above HTTP request (step S306).

In the client terminal apparatus 30, the HTTP response is received (step S307), and the above license issue history retrieval result is displayed on the Web browse (step S308).

As explained above, according to the first embodiment, a self account gives authorization to issue a license key to a low-order account ranked below the self account, while keeping information regarding the low-order account secret from a high-order account ranked above the above self account.

### [Second embodiment]

A license management system according to the second embodiment of the present invention will be explained.

In addition to the structure of the license management system according to the first embodiment, the second embodiment further has a structural feature in which a client terminal apparatus 35 of a server manager can access the server 20 through the Internet 10 as one of the client terminal apparatuses 30 as shown in FIG. 15. The account of the sever manager has no restriction, that is, it is not bound by authorization such as a management authorization to manage accounts or a reference authorization to refer to a license issue history which are explained with respect to the first embodiment. Therefore, retrieval of a license key issuer and deletion of a specific account can be executed in the following manner:

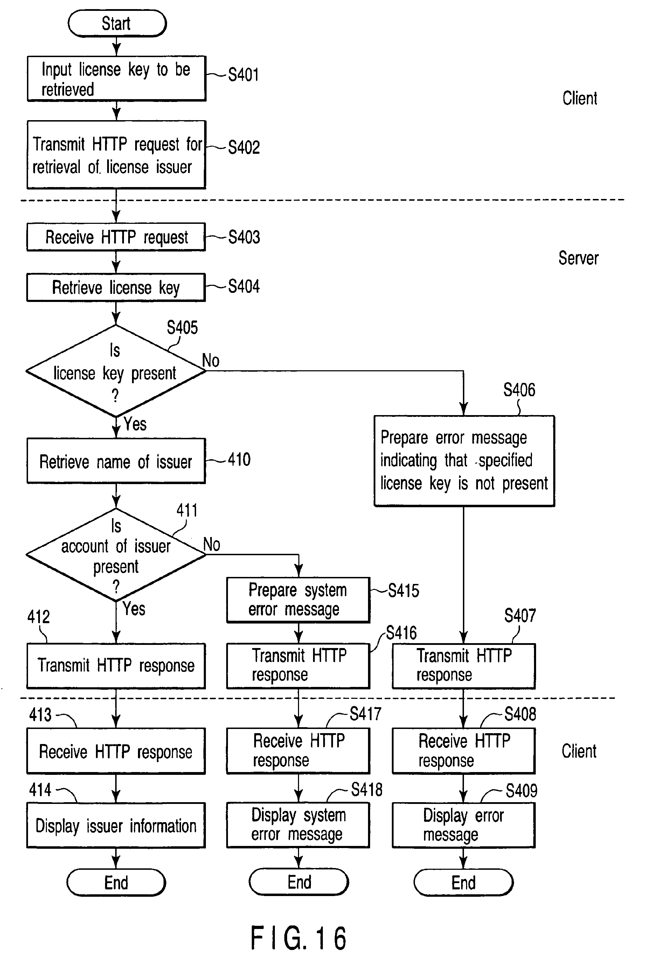

The operation of retrieving the name of a license key issuer is performed as shown in FIG. 16. To be more specific, the client terminal apparatus 35 of the server manager is logged in by using the account ID and password of the server manager, and an image for retrieval of the name of the license key issuer is displayed. In this state, a license key to be retrieved is input to a license key input field displayed in the image (step S401). Then, an HTTP request for retrieval of the name of the license key issuer is transmitted to the Web server 20 by the predetermined transmission operation (step S402).

In the Web server 20, the HTTP request is received (step S403), and a record having the input license key is retrieved from the license issue historical table 21B (step S404). Then, it is determined whether the input license key is present or not in the license issue historical table 21B (step S405).

When it is determined that the input license key is not present (step S405), an error message indicating that the input license key is not present is prepared (step S406), and an HTTP response is transmitted to the client terminal apparatus 30 which issues the HTTP request, i.e., the client terminal apparatus 35 of the server manager in this case (step S407). In the client terminal apparatus 35 of the server manager, the HTTP response is received (step S408), and the error message indicating that the specified license key is not present is displayed in the Web browser (step S409).

On the other hand, when it is determined that the input license key is present (step S405), a record having an account ID which is identical to an issuer ID of an issuer of the license key, i.e., an issuer ID registered in a record including the license key, is retrieved from the account table 21A (step S410). Then, it is determined whether or not the account of the above issuer is present or not (step S411).

When it is determined that the account of the issuer is present (step S411), an HTTP response is transmitted to the client terminal apparatus which issues the above HTTP request, i.e., the client terminal apparatus 35 of the server manager in this case (step S412). Then, the client terminal apparatus 35 of the server manager receives the HTTP response (step S413), and displays the retrieved issuer information, i.e., information regarding on the above record of the account table 21A, in the Web browser (step S414).

Furthermore, when it is determined that the account of the above issuer is not present (step S411), a system error message is prepared (step S415), and an HTTP response is transmitted to the client terminal apparatus 30 which issues the above HTTP request, i.e., the client terminal apparatus 35 of the server manager in this case (step S416). Then, the client terminal apparatus 35 of the server manager receives the HTTP response (step S417), and displays the system error message in the Web browser (step S418).

Due to provision of the above function of retrieving the name of a license key issuer, an account which illegally issues a license key can be found.

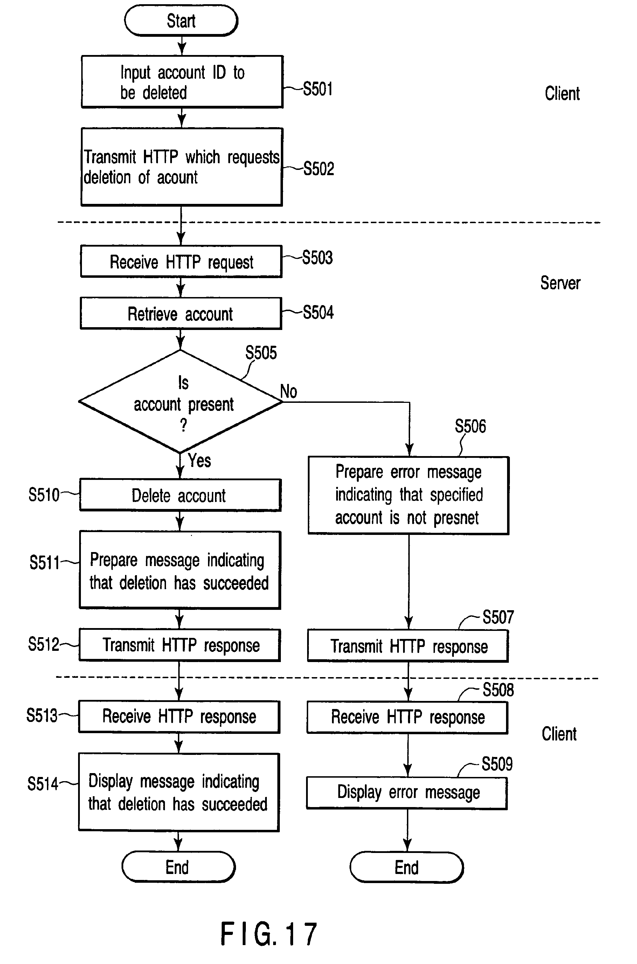

The operation of deleting the account found in the above manner will be performed as shown in FIG. 17. To be more specific, the client terminal server 30, i.e., the client terminal apparatus 35 of the server manager, is logged in by using the account ID and password of the serer manager, and an image for deletion of a specified account is displayed in the Web browser. In this state, the account ID of the above account to be deleted is input to an account ID input field (step S501). Then, an HTTP request which requests the deletion of an issuer is transmitted to the Web server 20 by the predetermined transmission operation (step S502).

The Web server 20 receives the HTTP request (step S503), and retrieves a record having the input account ID from the account table 21A (step S504). Then, it is determined whether the input account ID is present or not in the account table 21A (step S505).

When the input account ID is not present (step S505), an error message indicating that the input account is not present is prepared (step S506), and an HTTP response is transmitted to the client terminal apparatus 30 which issues the above HTTP request, i.e., the client terminal apparatus 35 of the server manager in this case (step S507). Then, the client terminal apparatus 35 receives the HTTP response (step S508), and displays the error massage indicating that the input account is not present, in the Web browser (step S509).

On the other hand, when the input account ID is present (step S505), a record having the account ID is deleted from the account table 21A (step S510). Then, a message to the effect that the deletion of the above record has succeeded is prepared (step S511), and an HTTP response is transmitted to the client terminal apparatus 30 which issues the HTTP request, i.e., the client terminal apparatus 35 of the server manager in this case (step S512). The client terminal apparatus 35 of the server manager receives the HTTP response (step S513), and displays the above message indicating that the deletion has succeeded, in the Web browser (step S514).

As explained above, according to the second embodiment, an illegal license key can be found, and an account which issues the illegal license key can be specified and deleted.

The present invention is explained by referring to the above embodiments, but it is not limited to the embodiments. Needless to say, various modifications and applications may be made without departing from the subject matter of the present invention. For example, in the above embodiments, the system is configured by using Java programs such as the JDBC 23 and the servlets 201. However, needless to say, the present invention can also be achieved by another programming language. In addition, each of bundled license keys may be input to the license input field 74 by a key input operation, or it may be set such that each of the bundled license keys is input by reading out a code such as a bar code stuck on a package of respective product software by using a code reader.

## Claims

1. A license management system which is provided with a server (20) for managing a plurality of kinds of accounts and issuance of a license key (40), and a plurality of terminal apparatuses (30; 31, 32, 33, 34, 35) which access the server through a network (10) by using respective predetermined accounts,
**characterized by** comprising:
account information management means (20) for managing account information regarding the plurality of kinds of accounts;
logging-in means (20, 30) for perform authentication of a predetermined account by using the predetermined account to log-in the predetermined account;
license key management means (20, 21) for issuing a license key based on account information regarding the logged-in predetermined account, and storing license key issue information regarding issuance of the license key;
account edit means (20) for permitting at least one associated account ranked below the logged-in predetermined account to be edited; and
reference means (20) for permitting only part of license key issue information regarding the at least one associated account ranked below the logged-in predetermined account to be referred to.

2. The system according to claim 1, **characterized in that** the account edit means performs at least one of a reference operation, an addition operation, a modification operation, a deletion operation and an authorization giving operation to account information regarding the at least one associated account ranked below the logged-in predetermined account.

3. The system according to claim 1, **characterized in that** the plurality of kinds of accounts have a hierarchal structure, and the account edit means permits only account information regarding the associated account ranked immediately behind the logged-in predetermined account to be edited.

4. The system according to claim 1 or 3, **characterized in that** the plurality of kinds of accounts have a hierarchal structure, and the reference means permits only part of license key issue information regarding all the associated accounts ranked below the logged-in predetermined account to be referred to.

5. The system according to one of claims 1 to 4,
**characterized in that** the account information includes at least an account ID, a type and an issuer ID of the account.

6. The system according to claim 5, **characterized in that** the account edit means permits at least one of account information including an account ID identical to an account ID of the logged-in predetermined account and account information including an issuer ID identical to an account ID of the logged-in predetermined account to be emitted.

7. The system according to claim 5, **characterized in that** the account information further includes at least one of a password, the name of a company, the name of a person in charge, the place of one's duty, post, address, telephone number, a facsimile number and an E-mail address.

8. The system according to claim 1 or 4,
**characterized in that** the license key issue information includes at least a license key and an issuer ID.

9. The system according to claim 8, **characterized in that** the license key issue information further includes at least one of an order number, a product code, a product version number, the number of licenses, the type of occupation of a purchaser and details of the purchaser.

10. The system according to claim 9,
**characterized in that** the reference means is allowed to refer to only one of the order number, the product code, the product version number and the number of licenses in the license key issue information.

11. The system according to claim 9, **characterized in that** the reference means inhibits reference to the license key, the type of occupation of the purchaser and the details of the purchaser in the license key issue information.

12. The system according to claim 9, **characterized in that** when the issuer ID is identical to the logged-in predetermined account, the reference means permits all associated information items of the license key issue information to be referred to.

13. The system according to claim 1, **characterized in that** the plurality of kinds of accounts have a hierarchal structure, and **characterized by** further comprising retrieving means (20) for retrieving and referring to account information regarding an issuer issuing a predetermined license key, when the logged-in predetermined account is a highest-order account.

14. The system according to claim 13, **characterized in that** the retrieving means includes:
license key issue information specifying means (20) for specifying license issue information including the predetermined license key;
issuer ID acquiring means (20) for acquiring an issuer ID included in the license key issue information specified by the license key issue information specifying means;
account information specifying means (20) for specifying account information including the issuer ID acquired by the issuer ID acquiring means; and
account information referring means (20) for referring to predetermined information included in the account information specified by the account information specifying means.

15. The system according to claim 13, **characterized by** further comprising deleting means (20) for deleting the account information retrieved by the retrieving means.

16. The system according to claim 1, **characterized in that** the license key managing means prepares a license key (40) including the number of licenses of available software.

17. The system according to claim 16, **characterized by** further comprising setting file generating means (20) for generating a setting file (511) including the license key necessary for installing the software.

18. The system according to claim 17, **characterized in that** the setting file includes install mode information regarding an install mode at time of installing the software in an arbitrary information processing apparatus (60).

19. The system according to claim 18, **characterized in that** the software includes an installer (512) which has a silent installing mode and a normal installing mode, and in the silent installing mode, a value is automatically set based on information of the setting file, and installing is carried out, and in the normal installing mode, installing is performed interactively with a user.

20. A license management method of a license management system which is provided with a server (20) for managing a plurality of kinds of accounts and issuance of a license key (40), and a plurality of terminal apparatuses (30; 31, 32, 33, 34, 35) which access the server through a network (10) by using respective predetermined accounts,
**characterized by** comprising:
performing authentication of a predetermined account by using the predetermined account to log-in the predetermined account;
issuing a license key based on account information regarding the logged-in predetermined account;
storing license key issue information regarding issuance of the license key; and
permitting only part of license key issue information regarding at least one associated account ranked below the logged-in predetermined account to be referred to.

21. A license management server (20) which permits a plurality of terminal apparatuses (30; 31, 32, 33, 34, 35) to access the server through a network (10) by using respective predetermined accounts,
**characterized by** comprising:
account information managing means (20) for managing account information regarding a plurality of kinds of accounts;
logging-in means (20) for permitting a predetermined account to be logged-in by using the predetermined account;
license key managing means (20, 21) for issuing a license key based on account information regarding the logged-in predetermined account, and storing license key issue information regarding issuance of the license key;
account editing means (20) for permitting account information regarding at least one associated account ranked below the logged-in predetermined account to be edited; and
reference means (20) for permitting only part of license key issue information regarding the at least one associated account ranked below the logged-in predetermined account to be referred to.

22. A license management software which causes a computer to perform license management, the license management software causing a computer (20) to:
manage account information regarding a plurality of kinds of accounts;
permit a predetermined account to log in on the computer with a respective one of external terminal apparatuses (30; 31, 32, 33, 34, 35) by using the predetermined account;
issue a license key based on account information regarding the logged-in predetermined account, and store license key issue information regarding issuance of the license key; and
permit account information regarding at least one associated account ranked below the logged-in predetermined account to be edited, and also only part of the license key issue information regarding the at least one associated account ranked below the logged-in predetermined account to be referred to.
